# EUROPÄISCHE PATENTSCHRIFT

(11) **EP 0 645 322 B1**
(45) Veröffentlichungstag und Bekanntmachung des Hinweises auf die Patenterteilung: **04.11.1998**
(21) Anmeldenummer: 94112108.9
(22) Anmeldetag: 03.08.1994
(51) Int. Cl.: B65G 1/137

(54) **Verfahren zum Verteilen von Retouren im Versandhandel, insbesondere von Bekleidungsstücken**
Method for distributing return articles in a mailer dispatchcenter, in particular of clothing
Méthode pour distribuer les objets repris dans un magasin d'expédition postale, en particulier pour vêtements

(30) Priorität: 23.09.1993 DE 4332315
(43) Veröffentlichungstag der Anmeldung: 29.03.1995
(73) Patentinhaber: Quelle Schickedanz AG & Co., 90762 Fürth (DE)
(72) Erfinder: Fischer, Werner, D-90537 Feucht (DE)
(74) Vertreter: Matschkur, Lindner, Blaumeier Patent- und Rechtsanwälte

(56) Entgegenhaltungen:
- EP-A- 0 209 750
- FR-A- 2 645 992
- US-A- 3 734 311
- US-A- 5 010 997

## Beschreibung

Die Erfindung betrifft ein verfahren zum verteilen von Retouren im Versandhandel, insbesondere von Bekleidungsstücken.

Damit die vom Besteller dem Versandhaus zurückgeschickten Gegenstände, sogenannte Retouren, dem Versand zwecks Neuversendung zugeführt werden können, sofern die Retouren noch den Qualitätserfordernissen genügen, sind eine vielzahl rein manueller Tätigkeiten vom Retoureneingang bis zum Einbringen der Retouren in ihre jeweiligen Verteilfächer im Versand erforderlich. So werden die Retouren nach einer ersten Qualitätsprüfung von Hand in große Transportwannen eingeschlichtet, die zu einem Sorter gefördert und dort ausgekippt werden. Dort werden in einem zweiten manuellen Handling die Retouren auf die Sorterschalen aufgelegt, die zu diesen zugeordneten Rutschen gefördert werden, an welchen die Retouren abgekippt werden. Daran anschließend werden die Retouren in einem dritten manuellen Handling in großvolumige Kartons eingeschlichtet, die dann dem Versand zugeführt werden, wo die Retouren aus den Kartons entnommen und wiederum manuell in die jeweiligen Verteilfächer einsortiert werden. Ein derartiges, rein manuelles Verteilen der Retouren ist jedoch zum einen im Hinblick auf die hohe erforderliche Personalzahl zum Ausführen der manuellen Tätigkeiten und damit verbunden auf die beachtlich hohen Kosten von Nachteil, zum anderen ist der vom Retoureneingang bis zum abschließenden Einsortieren erforderliche Zeitaufwand sehr groß, was insbesondere hinsichtlich der immensen vielzahl an Retoureneingängen, insbesondere bei Großversandhäusern, zu Problemen führt.

Grundsätzlich kennt man in der Lagertechnik auch das "chaotische" Einlagern von Gegenständen in kleiner Stückzahl, siehe z.B. EP-A- 0 349 433.

Der Erfindung liegt somit die Aufgabe zugrunde, ein Verfahren zum Verteilen der eingehenden Retouren zu schaffen, welches die erforderlichen manuellen Handgriffe auf ein Minimum reduziert und infolgedessen die eingangs genannten Probleme hinsichtlich der Personalzahl, der damit verbundenen Kosten und der Zeiterfordernisse weitestgehend löst.

Zur Lösung dieser Aufgabe ist bei einem Verfahren der eingangs genannten Art erfindungsgemäß vorgesehen, daß die Retouren in chaotischer Verteilung vollautomatisch in ein Retourenlager eingelagert werden, wobei die Daten der Lagerpositionen und die spezifischen Retourdaten der einzelnen Retouren erfaßt werden und lediglich die kommissionsbedingte Entnahme der Retouren aus dem Retourenlager entsprechend der Daten der Lagerpositionen und der spezifischen Retourdaten manuell erfolgt. Durch die vollständige Automatisierung des Verteilungsvorganges vom Retoureneingang bis zum Einlagern in das Retourenlager entfallen somit mit besonderem Vorteil sämtliche manuellen Tätigkeiten, lediglich die Entnahme der Retouren entsprechend der eingehenden Bestellungen seitens der Verbraucher erfolgen noch manuell. Infolgedessen lassen sich die personalbedingten Kosten, die bisher durch die Vielzahl der nötigen manuellen Handgriffe anfielen, vorteilhaft auf ein Minimum reduzieren, darüberhinaus werden durch die vollautomatische verteilung von dem manuellen Handling her rührende verteilungsfehler weitestgehend unterbunden.

Die Steuerung sowohl des vollautomatischen Einlagerns der Retouren als auch die für die Verteilung und die spätere Entnahme erforderliche Datenerfassung werden erfindungsgemäß von einer elektronischen Datenerfassungs- und -verarbeitungseinheit gesteuert, in welcher die ermittelten Daten gespeichert werden und somit mit besonderem Vorteil zu jeder Zeit verfügbar und abrufbar sind, so daß mittels einer derartigen Steuerung jedweder Verfahrensvorgang äußerst exakt und zeitlich abgestimmt ausgeführt werden kann, darüber hinaus können sämtliche Daten zu jeder Zeit abgerufen werden, weshalb jedwede Retour allzeit "präsent" und der gesamte Lagerbestand zu jeder Zeit kommissionsbedingt überprüfbar ist.

Zur Sicherstellung, daß nur den jeweiligen Qualitätserfordernissen entsprechende Retouren, sogenannte 1.-Wahl-Retouren einem Zweitversand zugänglich sind, kann erfindungsgemäß vorgesehen sein, daß die Retouren vor der Einlagerung einer Qualitätsprüfung unterzogen und mittels einer Verpackungsvorrichtung in Verpackungsmaterial, insbesondere in Folie eingeschweißt werden. Zur Ermittlung der spezifischen Retourdaten, beispielsweise der Bestellnummer der Retour oder einer fortlaufenden Nummer, wird die eingeschweißte Retour erfindungsgemäß mittels einer Erfassungseinrichtung, insbesondere einem Scanner abgetastet und die ermittelten Daten der Datenverarbeitungseinheit zugeführt. Um die jeweilige Retour entsprechend zu kennzeichnen, damit ein Auffinden derselben im Retourenlager problemlos möglich ist, ist in Weiterbildung der Erfindung vorgesehen, daß die spezifischen Retourdaten auf die eingeschweißte Retour mittels einer Druckvorrichtung, insbesondere einem Foliendrucker vorzugsweise randseitig aufgedruckt werden bzw. ein entsprechend bedrucktes Label aufgeklebt werden. An diesen Verfahrensschritt anschließend wird die derart gekennzeichnete Retour erfindungsgemäß mittels eines Werkzeugs, insbesondere eines Roboters automatisch in einen eine frontseitige Entnahmeöffnung aufweisenden Lagerbehälter derart eingebracht, daß die aufgedruckten spezifischen Retourdaten im Bereich der Entnahmeöffnung wahrnehmbar sind und dadurch vorteilhaft die Retour von dem die Retour kommissionsbedingt entnehmenden Lageristen als die solche erkannt werden kann. Erfindungsgemäß können mehrere derartiger Retouren in einem Lagerbehälter bis zur Erreichung eines vorbestimmten Füllstandes übereinandergestapelt werden.

Damit ein problemloses Auffinden des mit den Retouren beschickten Lagerbehälters im Retourenlager möglich ist, ist in weiterer Ausgestaltung der Erfindung vorgesehen, daß der Lagerbehälter einer spezifischen, mit einer Codierung versehenen Lagerposition in dem Retourenlager zugeordnet und mittels eines weiteren Werkzeugs, insbesondere eines Stapelroboters in der entsprechenden Lagerposition angeordnet wird. Alternativ zu einer direkten Anordnung der Lagerbehälter in einem bereits eingerichteten Retourenlager kann erfindungsgemäß vorgesehen sein, daß der Lagerbehälter in einen fahrbaren, die einzelnen Lagerpositionen aufweisenden, vorzugsweise mit einer Codierung versehenen Lagerwagen eingebracht wird, wobei das Retourenlager aus einem oder mehreren Lagerwagen gebildet wird. Somit kann infolge der Möglichkeit, Lagerwagen mit den darauf befindlichen Lagerbehältern, die in weiterer Erfindungsausgestaltung entsprechend ihrer Codierung der Lagerposition auf dem Lagerwagen aufeinandergestapelt und/oder nebeneinandergesetzt werden, der teuere und aufwendige Aufbau von feststehenden Lagerregalen entfallen.

Vor dem Einbringen der Lagerbehälter in das Retourenlager und/oder gegebenenfalls den Lagerwagen werden erfindungsgemäß die Codierungsdaten der spezifischen Lagerposition und gegebenenfalls des spezifischen Lagerwagens an dem Lagerbehälter mittels einer Druckvorrichtung, insbesondere einer Etikettiermaschine vorzugsweise frontseitig angebracht.

Sind nunmehr auch die Lagerbehälter entsprechend ihrer Codierung gekennzeichnet, ist in einem nächsten Verfahrensschritt erfindungsgemäß vorgesehen, daß in der elektronischen Datenerfassungs- und -verarbeitungseinheit die spezifischen Retourdaten und die Daten der Lagerposition und/oder des Lagerwagens jeder einzelnen Retour einander zugeordnet werden. Infolge dieser Zuordnung können somit mit besonderem Vorteil durch Abfrage der Datenverarbeitungseinheit sowohl der Bestand des Retourenlagers bezüglich eines bestimmten, angeforderten Gegenstandes überprüft als auch dessen exakte Lagerposition festgestellt werden, so daß bei Vorhandensein des abgefragten Gegenstandes dieser nur noch aus dem Retourenlager entnommen werden muß, jedwedes andere manuelle Handling vor Entnahme kann infolge der automatischen Einlagerung und der automatischen Positionszuordnung entfallen.

Erfindungsgemäß ist zur Erledigung eines neu eingehenden Kommissionierungsauftrages so vorzugehen, daß zuerst der Bestand des Retourenlagers bezüglich des Kommissionierungsauftrages abgefragt wird, so daß durch den zeitlichen Vorrang der Bestandsanalyse des Retourenlagers vor einer Abfrage des eigentlichen Hauptversandlagers ein Zweitversand der Retouren, sofern sie angefordert sind, gewährleistet ist. Somit ist für einen dauernden Ausgang von Retouren aus dem Lager gesorgt, weshalb eine übermäßige Anhäufung und damit ein Überladen des Lagers vermieden wird, darüber hinaus wird nicht jeder Kommissionierungsauftrag durch Versendung von Neuware erledigt.

Um die Anwenderfreundlichkeit des Verfahrens zu erhöhen, ist in Weiterbildung der Erfindung vorgesehen, daß die elektronische Datenerfassungs- und -verarbeitungseinheit vorzugsweise über eine zwischengeschaltete Vernetzungsebene mit einer der Kommissionierungsebene zugeordneten elektronischen Datenverarbeitungseinheit kommuniziert, so daß infolge dieser Vernetzung von der Kommissionierungsebene aus, an welcher die zu erledigenden Aufträge eingehen, direkt auf den Bestand des Retourenlagers zugegriffen werden kann, ohne daß eine zeitaufwendige Auftragsweiterleitung an das Retourenlager erforderlich ist. Erfindungsgemäß wird in Abhängigkeit des Abfrageergebnisses ein dem jeweiligen Kommissionierungsauftrag zugeordneter Warenschein erstellt, der der manuellen Entnahme der dem jeweiligen Auftrag zugeordneten Retouren aus dem Lager dient und der die spezifischen Retourdaten und die Codierungsdaten der Lagerposition und gegebenenfalls des Lagerwagens ausweist, so daß der die Warensendung zusammenstellende Lagerist die jeweilige Retour einfachst auffinden kann. Infolge der Vernetzung und der dauernden Aktualisierung des Datenbestandes der Datenverarbeitungseinheit des Retourenlagers können somit mit besonderem Vorteil die Warenscheine sofort nach Eingang des Kommissionierungsauftrages "just in time" erstellt werden, so daß jeder Warenschein anhand der aktuellen Lagerdaten erst bei tatsächlicher Erledigung des Auftrages ohne jedweden zur Erledigung nötigen Vorlauf erstellt wird. Nach Erstellung des Warenscheines werden erfindungsgemäß die Bestandsdaten des Retourenlagers in der elektronischen Datenerfassungs- und -verarbeitungseinheit in Abhängigkeit der zu entnehmenden Retouren aktualisiert, wodurch die Aktualität der Bestandsdaten sofort nach Erstellung des Warenscheins gewährleistet ist, so daß dadurch ein zwei- oder mehrmaliges Ausgeben ein und derselben Retour nicht möglich ist.

Da sich infolge der Entnahme der Retouren der Lagerbestand ständig ändert, ist ferner erfindungsgemäß vorgesehen, daß nach erfolgter Entnahme der Retouren die Lagerbehälter bei Erreichen eines vorbestimmten Füllstandes der Lagerbehälter und/oder des Lagerwagens und/oder des Retourenlagers zum Wiederbefüllen zurückgeführt werden, das Lager wird somit durch erneutes Beschicken der Lagerbehälter analog dem Verfahren bei der Erstbeschickung wieder aufgefüllt, so daß die Ausnutzung der Lagerkapazität weitestgehend optimiert wird.

Desweiteren sieht die Erfindung einen Lagerbehälter in Kastenform für ein derartiges Retourenlager zur Verwendung in dem oben beschriebenen Verfahren vor, wobei der vorzugsweise rechteckige Lagerbehälter erfindungsgemäß oberseitig offen ist und, durch eine quer zur Längsrichtung stehende, mittig angeordnete Trennwand in zwei im wesentlichen gleichvolumige Fächer geteilt wird, und an beiden Frontseiten eine Entnahmeöffnung angeordnet ist, was insbesondere dann von Vorteil ist, wenn ein beidseitiger Zugang zu den beispielsweise auf dem Lagerwagen angeordneten Lagerbehältern möglich ist.

Damit die eingebrachten Retouren sicher transportiert werden, ohne daß sie aus der Entnahmeöffnung fallen können, wenn die Lagerbehälter der beispielsweise auf einem in das Retourenlager zu fahrenden Lagerwagen angeordnet sind, ist in Weiterbildung des Erfindungsgedankens eine im Bereich der Entnahmeöffnung angeordnete Verschlußvorrichtung zum Verschließen der Entnahmeöffnung nach erfolgter Befüllung vorgesehen, die in weiterer Ausbildung erfindungsgemäß als ein rolleauartiger Schiebeverschluß ausgebildet sein kann, der einfachst zum Transport zugeschoben wird.

Damit eine Beschädigung der eingebrachten Retouren dann ausgeschlossen ist, wenn die Lagerbehälter übereinandergestapelt werden, ist in weiterer Ausgestaltung der Erfindung vorgesehen, daß an der der Entnahmeöffnung gegenüberliegenden Wand innenseitig angeordnete Anzeigeelemente zur Füllstandsanzeige vorgesehen sind, bis zu welchen maximal ein Einfüllen von Retouren möglich ist, so daß dadurch ein oberseitig bzw. randseitiges Überstehen derselben verhindert wird. Um die Füllstandskontrolle in den automatisierten Verteilungsprozeß einbinden zu können, ist in weiterer Ausgestaltung der Erfindung vorgesehen, daß die Anzeigeelemente derart ausgebildet sind, daß sie während des Befüllens mit separat angeordneten, mit der elektronischen Datenerfassungs- und -verarbeitungseinheit in Verbindung stehenden Sensorelementen derart in Verbindung treten, daß die Steuerung des Befüllens des Behälters in Abhängigkeit des Füllstandes erfolgt, wobei die Anzeigeelemente erfindungsgemäß als Reflektoren ausgebildet sind, die mit den Sensorelementen eine Lichtschranke bilden, mittels welcher das Erreichen bzw. Überschreiten der maximalen Füllhöhe beim Beschicken erfassbar ist, so daß aufgrund der Vernetzung mit der die Robotersteuerung ausführenden Einheit diese entsprechend dem Füllstandssignal gesteuert werden kann.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine schematisierte Ansicht des Verfahrensablaufs vom Retoureneingang bis zum Beladen der Lagerbehälter,
- Fig. 2: eine schematisierte Ansicht des Verladevorgangs der beladenen Lagerbehälter auf einen Lagerwagen,
- Fig. 3: eine schematische Ansicht eines aus beladenen Ladewägen gebildeten Retourenlagers,
- Fig. 4: eine perspektivische Ansicht eines Lagerbehälters,
- Fig. 5: eine perspektivische Ansicht des befüllten Lagerbehälters aus Fig. 4 mit Codierungskennzeichnung,
- Fig. 6: eine perspektivische Ansicht eines beladenen Lagerwagens mit Transportsicherung,
- Fig. 7: eine Prinzipskizze der Lagerplatzcodierung eines Lagerwagens,
- Fig. 8: ein Vernetzungsschema der verschiedenen Datenerfassungs- und -verarbeitungseinheiten, und
- Fig. 9: eine Ansicht eines der Entnahme einer bestimmten Retoure zugeordneten Warenentnahmescheines.

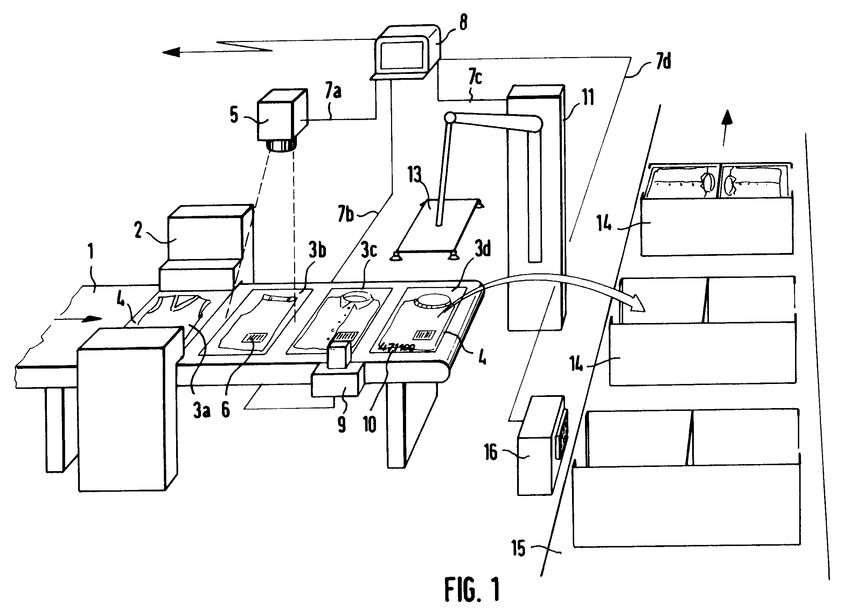

Wie aus Fig. 1 zu entnehmen, werden die eingehenden Retouren auf einem Förderband 1 befördert, nachdem sie einer ersten optischen Qualitätsprüfung unterzogen wurden. Dem Förderband 1 zugeschaltet ist eine Folienmaschine 2, mittels welcher eine Retour 3a in eine Folie 4 eingeschweißt wird. Nach Verlassen der Folienmaschine 2 wird die eingeschweißte Retour auf dem Förderband 1 weitergefördert bis zu einem Scanner 5, der oberhalb des Förderbandes 1 angeordnet ist und mittels welchem die Retoure 3b abgescannt wird, um dabei das Bestellnummer-Label 6 oder sonstige, retourspezifische Daten einzulesen. Der Scanner 5 ist über eine Datenleitung 7a mit einer elektronischen Datenerfassungs- und - verarbeitungseinheit 8 verbunden, an welche die während des Scannens ermittelten Daten übertragen werden. Nach erfolgter Datenerfassung wird die abgescannte Retour mittels des Förderbandes 1 bis zu einem Foliendrucker 9 weiterbefördert, welcher über eine Datenleitung 7b ebenfalls mit der Datenverarbeitungseinrichtung 8 in Verbindung steht. Mittels des Foliendruckers 9 wird, wie bei der Retour 3d zu entnehmen, am unteren Rand der Folie 4 die mittels des Scanners 5 ermittelte Bestellnummer 10, die auf dem Bestellnummer-Label 6 als Bar-Code verschlüsselt vorliegt, in lesbaren Ziffern auf die jeweilige Retour (hier Retour 3c) aufgedruckt. Nach Beendigung des Druckvorgangs wird die Retour mittels des Förderbandes 1 bis in den Zugriffsbereich eines Roboters 11 weitergefördert, der ebenfalls über eine Datenleitung 7c mit der Datenverarbeitungseinheit 8 in Verbindung steht. Erhält der Roboter 11 über die Datenleitung 7c von der Verarbeitungseinheit 8 das Signal, daß eine Retour 3d in seinem Zugriffsbereich ist, nimmt der Roboter 11 mittels einer an seinem Arm 12 befindlichen Aufnehmevorrichtung 13 die Retour 3d auf und übergibt sie an einen Lagerbehälter 14, der auf einem im gezeigten Ausführungsbeispiel senkrecht zum ersten Förderband 1 verlaufenden Förderband 15 befördert wird. Mittels einer Etikettiermaschine 16, die dem Förderband 15 zugeordnet ist, werden an den Behältern 14 während oder nach Beendigung des Beladevorgangs die entsprechenden Lagerplatzcodierungen angebracht, welche die späteren Lagerpositionen der Behälter 14 nach Einlagerung in dem Retourenlager angeben. Zu diesem Zweck ist die Etikettiermaschine 16 über eine Datenleitung 7d ebenfalls mit der Datenverarbeitungseinheit 8 verbunden. In der Datenverarbeitungseinheit 8 werden nach erfolgter Beschriftung der Lagerbehälter 14 die Daten der spezifischen Retouren, also beispielsweise die Bestellnummer oder eine andere, an der Retour angebrachte Kennzeichnung, und die jeweilige Nummer des Behälters, in welchem die Retour sich befindet, einander zugeordnet, so daß über diese Datenverarbeitungseinheit 8 sämtliche, eine bestimmte Retour betreffende Daten abgefragt und dadurch diese im Lager aufgefunden werden kann.

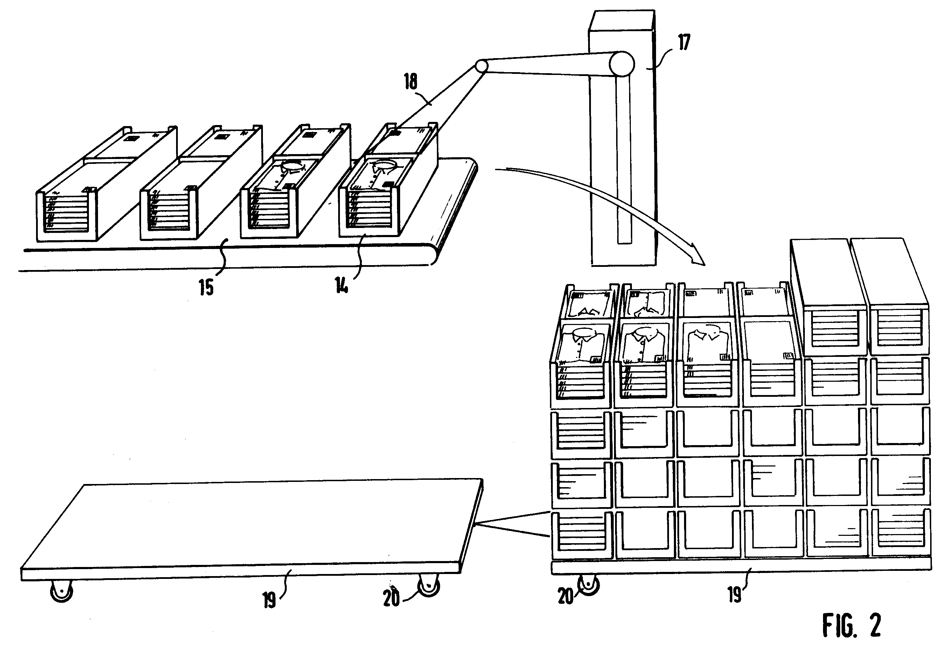

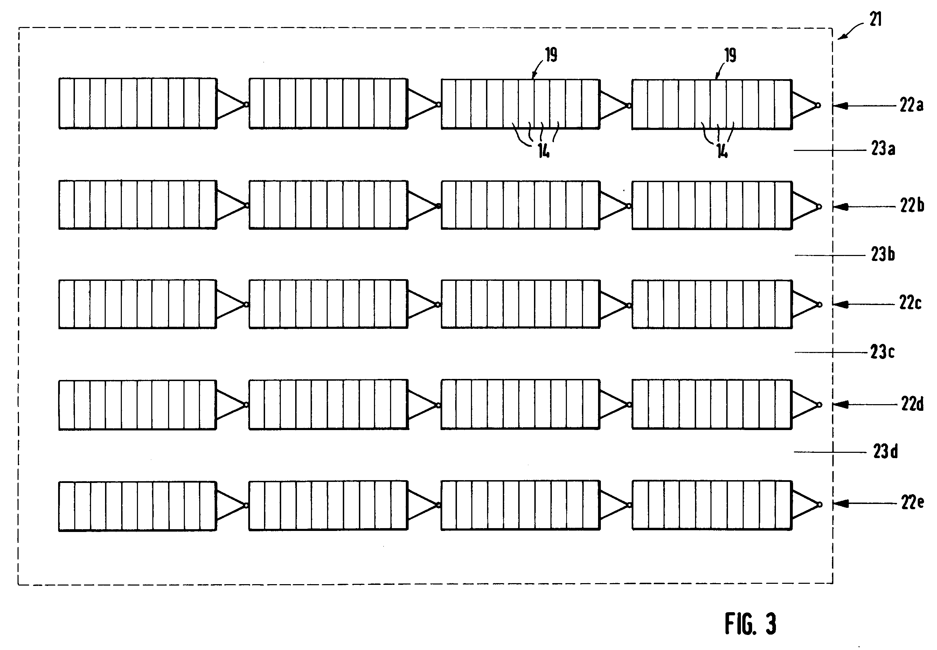

Die beladenen Lagerbehälter 14 werden auf dem Förderband 15 bis in den Zugriffsbereich eines Stapelroboters 17 weiter-gefördert, welcher mittels eines Armes 18 die angeförderten Lagerbehälter 14 aufnimmt und, wie Fig. 2 zu entnehmen, auf einem Lagerwagen 19 übereinander und nebeneinander anordnet. Die Lagerbehälter 14 werden so lange aufeinandergestapelt, bis der Lagerwagen 19 einen vorbestimmten Füllstand erreicht, wonach der Lagerwagen, der über Räder 20 verfahrbar ist, aus dem Beladebereich des Stapelroboters 17 abgezogen wird. An dem Lagerwagen 19 kann ein weiterer Lagerwagen 19 angekoppelt sein, der durch Abziehen des ersten Lagerwagens 19 in den Stapelbereich des Roboters 17 gebracht wird und der dann mit Lagerbehältern 14 beladen wird. Die derart beladenen Lagerwägen 19 können dann entweder einzeln oder als Wagenzug zu einem Retourenlager 21 zusammengestellt werden, wie dies aus Fig. 3 zu entnehmen ist. Zwischen den einzelnen Wagenreihen 22a bis 22e sind Gänge 23a bis 23d gebildet, so daß der eine bestimmte Retour suchende Lagerist an jedwede Stelle im Lager 21 gelangen kann.

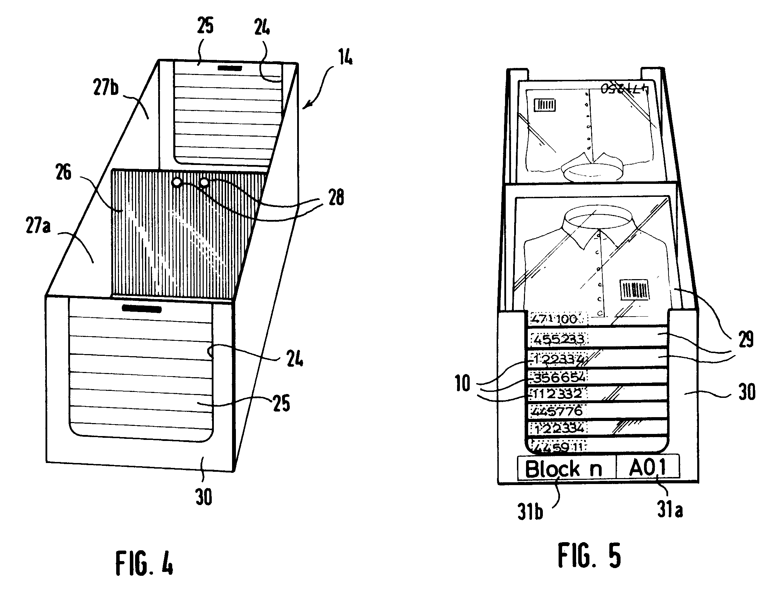

Fig. 4 zeigt einen Lagerbehälter 14 im Detail. Der Behälter 14, der im gezeigten Ausführungsbeispiel eine rechteckige Kastenform aufweist, ist an seinen Stirnseiten 30 mit je einer Entnahmeöffnung 24 versehen, welche mittels rolleauartiger Schiebeverschlüsse 25 zum Transport verschlossen werden können. In der Behältermitte ist eine Trennwand 26 angeordnet, so daß der Lagerbehälter 14 in zwei im wesentlichen gleichvolumige Fächer 27a, 27b aufgeteilt wird. Um ein sicheres Aufstapeln mehrerer Behälter 14 übereinander zu gewährleisten, sind sowohl die Seitenwände als auch die im Bereich der Entnahmeöffnungen 24 verbleibenden Wandbereiche verstärkt ausgebildet, damit ein Zusammenbrechen eines mehrere andere Lagerbehälter 14 tragenden Behälters 14 ausgeschlossen ist. Beidseits der Trennwand 26 sind Anzeigeelemente 28, die vorzugsweise als Reflektoren ausgebildet sind, zum Anzeigen des jeweiligen Füllstandes jedes Faches 27a, 27b angeordnet. Diese Anzeigeelemente 28 bilden mit nicht dargestellten, separat angeordneten und mit der Steuerung des Roboters 11 in Verbindung stehenden Sensorelementen eine Lichtschranke, mittels welcher ein Überschreiten des zuläßigen Höchstfüllstandes ermittelt und dementsprechend der Roboter 11 gesteuert werden kann.

Fig. 5 zeigt die Beladeweise des in Fig. 4 gezeigten Behälters mit übereinandergestapelten Retouren. Dabei werden die Retouren 29 derart in die Fächer 27a, 27b eingebracht und übereinandergestapelt, daß die Kennzeichnungen, im gezeigten Ausführungsbeispiel die Bestellnummern 10, im Bereich der geöffneten Entnahmeöffnung 24 sichtbar sind, so daß der eine bestimmte Retour 29 suchende Lagerist diese durch einfaches Vergleichen der sichtbaren Bestellnummern auffinden kann. An jeder Stirnseite 30 unterhalb der Entnahmeöffnungen 24 wird mittels der Etikettiermaschine 16 die die entsprechende Lagerposition und den jeweiligen Lagerwagen angebende Codierung 31a, 31b angebracht, anhand welcher die einzelnen Behälter 14 im Lager 21 bzw. im jeweiligen Lagerwagen 19 aufzufinden sind.

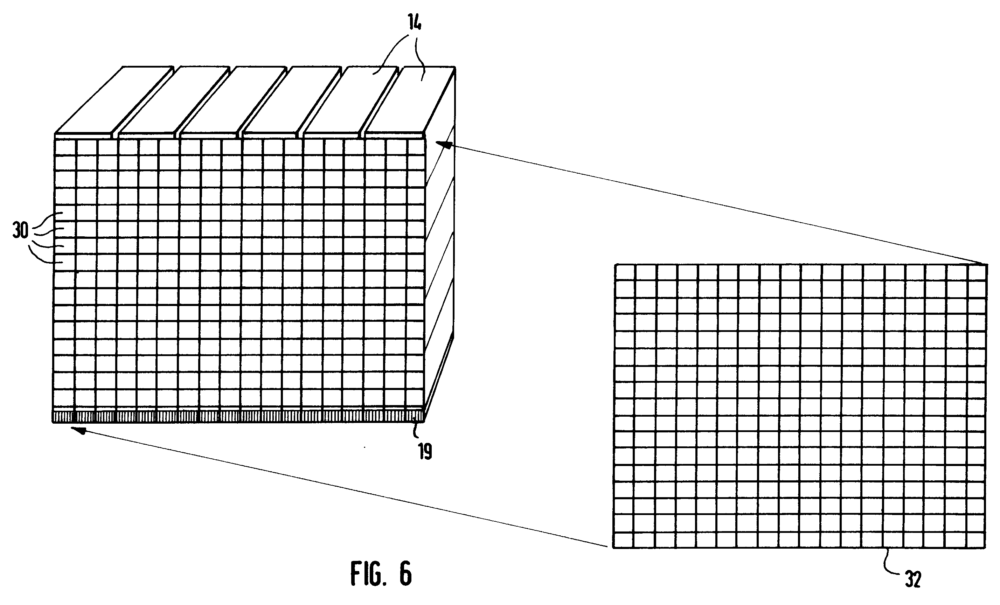

Eine Alternative zu der in Fig. 4 gezeigten rolleauartigen Transportsicherung ist in Fig. 6 gezeigt. Die einzelnen Lagerbehälter 14 werden nach Befüllen auf einem Lagerwagen 19 aufeinandergestapelt, bis der vorbestimmte Füllgrad des Lagerwagens 19 erreicht ist. Danach werden die durch die Stirnseiten 30 der Lagerbehälter 14 gebildeten Seitenwände mit einer Gittersicherung 32 verhängt, so daß die einzelnen Entnahmeöffnungen 24 der Lagerbehälter 14 vergittert werden.

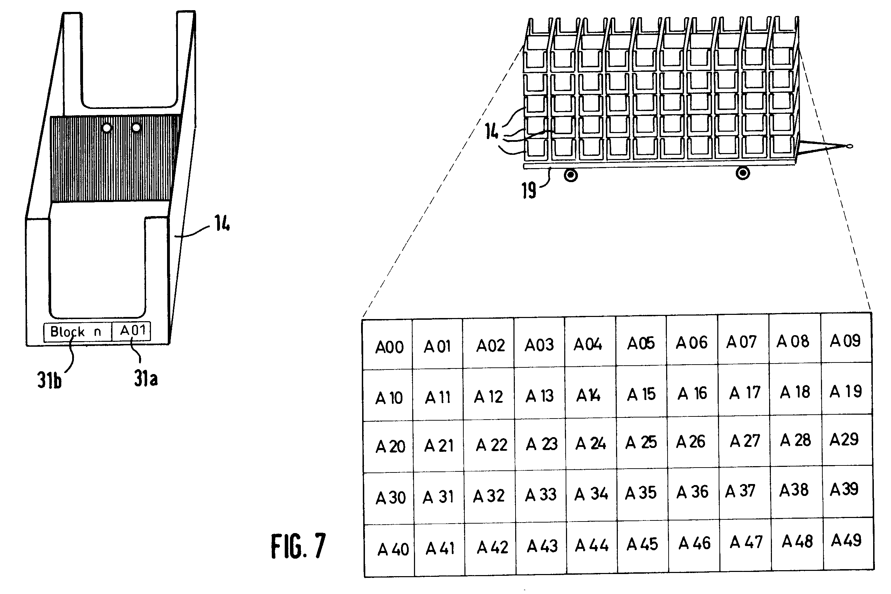

Fig. 7 zeigt ein Beispiel für die Codierung der einzelnen Lagerpositionen der auf einem Lagerwagen 19 aufgestapelten Lagerbehälter 14, wobei die Lagerbehälter 14 die in Fig. 4 gezeigte, doppelseitig nutzbare Ausführungsform besitzen. Die Lagerbehälter 14 werden wie in der oberen Bildhälfte aus Fig. 7 gezeigt übereinandergestapelt, so daß zehn aus jeweils fünf Lagerbehältern 14 bestehende Türme auf einem Lagerwagen 19 aufeinandergestapelt bzw. nebeneinandergesetzt werden. Da jeder Lagerbehälter 14 beidseitig zugänglich ist, werden zur Codierung die beiden Seiten mit je einem unterschiedlichen Code, im gezeigten Beispiel mit "A" und "B", gekennzeichnet. Jeder Lagerbehälter 14 der insgesamt fünfzig auf dem Lagerwagen 19 angeordneten Behälter erhält auf jeder Seite eine seiner Position entsprechende Codierung, die im gezeigten Ausführungsbeispiel von "00" bis "49" fortlaufend durchläuft. Dabei erhält im gezeigten Ausführungsbeispiel die auf Seite "A" links oben stehende Behälterhälfte die Codierung "00", die sich horizontal anschließende Behälterhälfte die Codierung "01" usw. bis zur rechts oben angeordneten Behälterhälfte mit der Codierung "09", wonach die Zählweise auf die unterhalb der "00"-Be-hälterhälfte angeordnete Behälterhälfte zurückspringt, die dann die Codierung "10" enthält. Mit diesem Schema werden dann sämtliche fünfzig Behälterhälften einer Seite codiert. Die Codierung der gegenüberliegenden Seite "B" erfolgt in gleicher Weise, jedoch sind die Zahlenreihen der Seiten "A" und "B" zueinander spiegelverkehrt. Wie Fig. 7 zu entnehmen, werden den jeweiligen Lagerfachcodierungen "00" bis "49" die jeweilige Seitencodierung "A" oder "B" vorangesetzt. Wird das Retourenlager 21 in der in Fig. 3 gezeigten Weise aus mehreren Lagerwägen 19 gebildet, so ist zum Auffinden des entsprechenden Lagerfachs auch die Angabe des betreffenden Lagerwagens 19 nötig. Dies erfolgt durch Angabe der jeweiligen Block-Codierung 31b, die entweder als fortlaufende Zahl oder als fortlaufender Buchstabe gewählt sein kann. Diese Blocknummer 31b wird, wie dies ebenfalls aus Fig. 7 zu entnehmen ist, der Seiten- und Lagerfachcodierung 31a vorangesetzt, so daß sich aus der mittels der Etikettiermaschine 16 aufgebrachten Codierung, wie sie in Fig. 7 gezeigt ist, entnehmen läßt: Block n, Seite A, Lagerplatz 01.

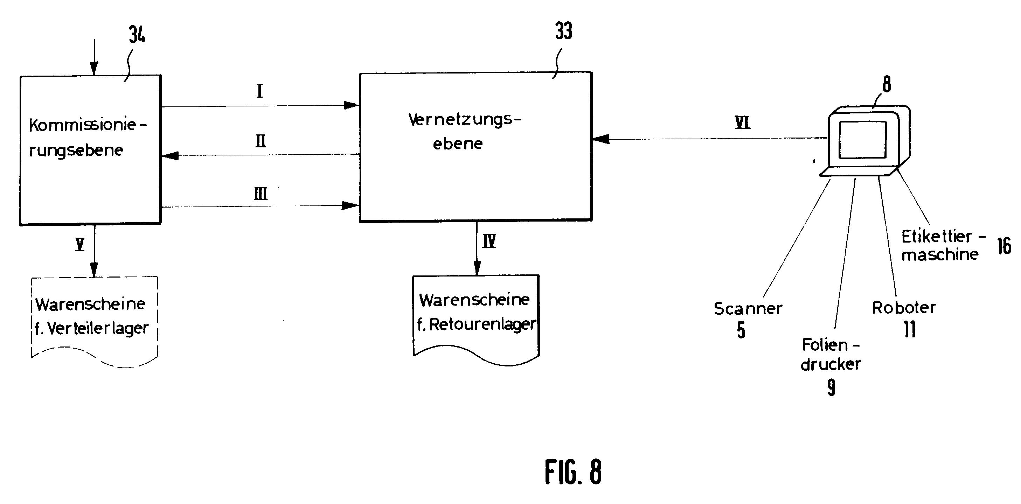

Fig. 8 zeigt schematisch die Vernetzung der Datenverarbeitungseinheit 8 mit weiteren Datenverarbeitungseinheiten bzw. -ebenen. Die Datenverarbeitungseinheit 8 ist im gezeigten Ausführungsbeispiel mit einer zwischengeschalteten Vernetzungsebene 33 verbunden, welche wiederum mit einer der Kommissionierungsebene zugeordneten Datenverarbeitungseinheit 34 vernetzt ist. Bei Eingang eines Kommissionierungsauftrages in der Kommissionierungsebene erfolgt aufgrund dieser Vernetzung zunächst eine Abfrage (Pfeil I) der Vernetzungsebene 33, die auf sämtliche Datenbestände der Datenverarbeitungseinheit 8 Zugriff hat (Pfeil VI), ob die dem Kommissionierungsauftrag entsprechenden Gegenstände bereits als Retouren im Retourenlager präsent sind. Gemäß dem Pfeil II wird das Abfrageergebnis von der Vernetzungsebene 33 an die Datenverarbeitungseinheit 34 gegeben, wonach, falls entsprechende Retouren vorhanden sind, die jeweiligen Picking-Daten (Pfeil III) an die Vernetzungsebene 33 gegeben werden. Von der Vernetzungsebene 33 ausgehend werden aufgrund der Picking-Daten (Pfeil III) die Angaben zur Erstellung der dem jeweiligen Auftrag zugeordneten Warenentnahmescheine (Pfeil IV) ausgegeben. Da der Vernetzungsebene 33 sämtliche aktuellen Bestandsdaten der Datenverarbeitungseinheit 8 zur Verfügung stehen, kann nach Anfrage seitens der Datenverarbeitungseinheit 34 der Warenschein "just in time" erstellt werden, so daß jeder Auftrag ohne zeitlichen Versatz und anhand aktuellster Daten bearbeitet werden kann. Da bei eingehenden Kommissionierungsaufträgen die Abfrage bezüglich des Retourenlagers einer Abfrage des Neuwarenlagers zeitlich vorgeschaltet ist, ist somit automatisch ein Versand vorhandener Retouren vor der Versendung von Neuware gewährleistet, so daß eine langdauernde Lagerhaltung der Retouren entfällt. Sollten jedoch die angeforderten Gegenstände nicht im Retourenlager präsent sein, erfolgt die Erledigung des Kommissionierungsauftrages durch Versendung von Neuware aus dem Verteilerlager (Pfeil V).

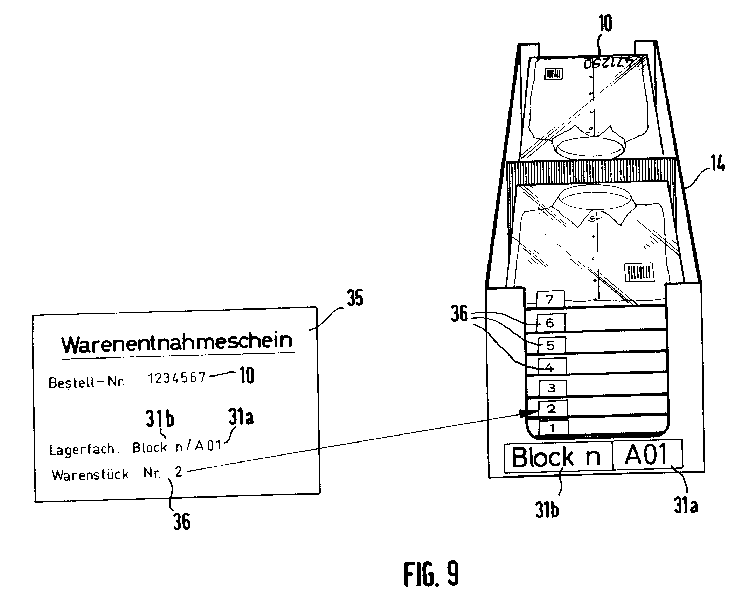

Fig. 9 zeigt nunmehr den einem entsprechenden Kommissionierungsauftrag zugeordneten und aufgrund der aktuellen Bestandsdaten des Retourenlagers erstellten Warenentnahmeschein 35, anhand welchem der Lagerist die gesuchte Retour dem Retourenlager entnimmt. Dabei weist der Warenentnahmeschein 35 die entsprechenden Lagerpositions- und Lagerwagencodierungen 31a, 31b aus, anhand welcher das jeweilige Lagerfach aufzufinden ist. Um nunmehr die gesuchte Retour ausfindig zu machen, kann entweder die Bestellnummer 10 oder eine fortlaufende Nummer 36 ausgedruckt sein, je nachdem, welche von beiden an der zu suchenden Retour aufgedruckt ist.

## Patentansprüche

1. Verfahren zum Verteilen von Retouren im Versandhandel, insbesondere von Bekleidungsstücken, dadurch gekennzeichnet, daß die Retouren (3a,3b,3c,3d,29) in chaotischer Verteilung vollautomatisch in ein Retourenlager (21) eingelagert werden, wobei die Daten der Lagerpositionen und die spezifischen Retourendaten - vorzugsweise durch Übernahme der aufliegenden bar-Code-Beschriftung - der einzelnen Retouren (3a,3b,3c,3d,29) erfaßt werden und lediglich die kommissionsbedingte Entnahme der Retouren (3a,3b,3c,3d,29) aus dem Retourenlager (21) entsprechend der Daten der Lagerpositionen und der spezifischen Retourendaten manuell erfolgt.

2. Verfahren nach Anspruch 1, dadurch gekennzeichnet, daß die vollautomatische Einlagerung der Retouren (3a,3b,3c,3d,29) und die Datenerfassung von einer elektronischen Datenerfassungs- und -verarbeitungseinheit (8) gesteuert wird, in der die ermittelten Daten gespeichert werden.

3. Verfahren nach Anspruch 2, dadurch gekennzeichnet, daß die Retouren (3a,3b,3c,3d,29) vor der Einlagerung einer Qualitätsprüfung unterzogen und mittels einer Verpackungsvorrichtung (2) in Verpackungsmaterial, insbesondere in Folie (4) eingeschweißt werden.

4. Verfahren nach Anspruch 3, dadurch gekennzeichnet, daß die spezifischen Retourdaten der eingeschweißten Retouren (3a) mittels einer Erfassungseinrichtung, insbesondere eines Scanners (5) erfaßt werden.

5. Verfahren nach Anspruch 4, dadurch gekennzeichnet, daß als spezifischen Retourdaten die Bestellnummer (10) der Retour und/oder eine fortlaufende Nummer (36) erfaßt werden.

6. Verfahren nach Anspruch 5 oder 6, dadurch gekennzeichnet, daß die spezifischen Retourdaten auf die eingeschweißte Retour (3c) mittels einer Druckvorrichtung, insbesondere einem Foliendrucker (9) vzgw. randseitig aufgedruckt werden, oder ein entsprechend bedrucktes Label aufgeklebt wird.

7. Verfahren nach Anspruch 6, dadurch gekennzeichnet, daß die Retour (3d) mittels eines automatischen Werkzeuges, insbesondere eines Roboters (11) in einen eine frontseitige Entnahmeöffnung (24) aufweisenden Lagerbehälter (14) derart eingebracht wird, daß die aufgedruckten spezifischen Retourdaten (10,37) im Bereich der Entnahmeöffnung (24) wahrnehmbar sind.

8. Verfahren nach Anspruch 7, dadurch gekennzeichnet, daß mehrere Retouren (28) in einem Lagerbehälter (14) bis zur Erreichung eines vorbestimmten Füllstandes übereinandergestapelt werden.

9. Verfahren nach Anspruch 7 oder 8, dadurch gekennzeichnet, daß der Lagerbehälter (14) einer spezifischen, mit einer Codierung (31a) versehenen Lagerposition in dem Retourenlager (21) zugeordnet und mittels eines weiteren Werkzeugs, insbesondere eines Stapelroboters (17) in der entsprechenden Lagerposition angeordnet wird.

10. Verfahren nach Anspruch 9, dadurch gekennzeichnet, daß der Lagerbehälter (14) in einen fahrbaren, die einzelnen Lagerpositionen aufweisenden, vzgw. mit einer Codierung (31b) versehenen Lagerwagen (19) eingebracht wird, wobei das Retourenlager (21) aus einem oder mehreren Lagerwagen (19) gebildet wird.

11. Verfahren nach Anspruch 10, dadurch gekennzeichnet, daß die Lagerbehälter (14) entsprechend ihrer Codierung (31a) der Lagerposition auf dem Lagerwagen (19) aufeinandergestapelt und/oder nebeneinandergesetzt werden.

12. Verfahren nach einem der Ansprüche 9 bis 11, dadurch gekennzeichnet, daß vor der Einbringung der Lagerbehälter (14) in das Retourenlager (21) und/oder gegebenenfalls den Lagerwagen (19) die Codierungsdaten (31a,31b) der spezifischen Lagerposition und gegebenenfalls des spezifischen Lagerwagens (19) an dem Lagerbehälter (14) mittels einer Druckvorrichtung, insbesondere einer Etikettiermaschine (16) vzgw. frontseitig (30) angebracht werden.

13. Verfahren nach Anspruch 12, dadurch gekennzeichnet, daß in der elektronischen Datenerfassungs- und -verarbeitungseinheit (8) die spezifischen Retourdaten (10,36) und die Daten (31a,31b) der Lagerposition und/oder des Lagerwagens (19) jeder einzelnen Retour (28) einander zugeordnet werden.

14. Verfahren nach Anspruch 13, dadurch gekennzeichnet, daß zur Erledigung jedes Kommissionierungsauftrages zuerst der Bestand des Retourenlagers (21) bezüglich des Kommissionierungsauftrages abgefragt wird.

15. Verfahren nach Anspruch 14, dadurch gekennzeichnet, daß die elektronische Datenerfassungs- und -verarbeitungseinheit (8) vzgw. über eine zwischengeschaltete Vernetzungsebene (33) mit einer der Kommissionierungsebene zugeordneten elektronischen Datenverarbeitungseinheit (34) kommuniziert.

16. Verfahren nach Anspruch 14 oder 15, dadurch gekennzeichnet, daß in Abhängigkeit des Abfrageergebnisses ein dem jeweiligen Kommissionierungsauftrag zugeordneter, der manuellen Entnahme der dem jeweiligen Kommissionierungsauftrag zugeordneten Retouren (29) aus dem Retourenlager (21) dienender und die spezifischen Retourdaten (10,36) und die Codierungsdaten (31a,31b) der Lagerposition und gegebenenfalls des Lagerwagens (19) ausweisender Warenschein (35) erstellt wird.

17. Verfahren nach Anspruch 16, dadurch gekennzeichnet, daß nach Erstellung des Warenscheines (35) die Bestandsdaten des Retourenlagers (21) in der elektronischen Datenerfassungs- und -verarbeitungseinheit (8) in Abhängigkeit zu entnehmenden Retouren (29) aktualisiert werden.

18. Verfahren nach Anspruch 17, dadurch gekennzeichnet, daß nach erfolgter Entnahme der Retouren (29) die Lagerbehälter (14) bei Erreichen eines vorbestimmten Füllstandes der Lagerbehälter (14) und/oder des Lagerwagens (19) und/oder des Retourenlagers (21) zum Verdichten oder Wiederbefüllen zurückgeführt werden.

19. Lagerbehälter in Kastenform für ein Retourenlager zur Verwendung in dem Verfahren nach einem der Ansprüche 7 bis 18, wobei der vzgw. rechteckige Lagerbehälter (14) oberseitig offen ist und an wenigstens einer der Frontseiten (30) eine Entnahmeöffnung (24) zur frontseitigen Entnahme der eingelagerten Retouren (29) aufweist, dadurch gekennzeichnet, daß der Lagerbehälter (14) durch eine quer zur Längsrichtung stehende, mittig angeordnete Trennwand (26) in zwei i.w. gleichvolumige Fächer (27a,27b) geteilt wird, und daß an beiden Frontseiten (30) eine Entnahmeöffnung (24) angeordnet ist.

20. Lagerbehälter nach Anspruch 19, dadurch gekennzeichnet, daß im Bereich der Entnahmeöffnung (24) eine Verschlußvorrichtung zum Verschließen der Entnahmeöffnung (24) nach erfolgter Befüllung angeordnet ist.

21. Lagerbehälter nach Anspruch 20, dadurch gekennzeichnet, daß die Verschlußvorrichtung als ein rolleauartiger Schiebeverschluß (25) ausgebildet ist.

22. Lagerbehälter nach Anspruch 20 oder 21, gekennzeichnet durch an der der Entnahmeöffnung (24) gegenüberliegenden Wand (25) innenseitig angeordnete Anzeigeelemente (28) zur Füllstandsanzeige.

23. Lagerbehälter nach Anspruch 22, dadurch gekennzeichnet, daß die Anzeigeelemente (28) derart ausgebildet sind, daß sie während des Befüllens mit separat angeordneten, mit der elektronischen Datenerfassungs- und -verarbeitungseinheit (8) in Verbindung stehenden Sensorelementen derart in Verbindung treten, daß die Steuerung des Befüllens des Lagerbehälters (14) in Abhängigkeit des Füllstandes erfolgt.

24. Lagerbehälter nach Anspruch 22, dadurch gekennzeichnet, daß die Anzeigeelemente (28) als Reflektoren ausgebildet sind, die mit den Sensorelementen eine Lichtschranke bilden.

## Claims

1. Method of distributing returned articles in a mail order dispatch centre, in particular of articles of clothing, characterised in that the returned articles (3a, 3b, 3c, 3d, 29) are automatically randomly distributed and stored into a returned article store (21), wherein the data of the storage positions and the specific returned article data of the individual articles (3a, 3b, 3c, 3d, 29) are detected - preferably by taking the barcode thereon - and only the removal of those returned articles (3a, 3b, 3c, 3d, 29) from the returned article store (21) is effected manually conditional upon an order according to the data of the storage positions and the specific returned article data.

2. Method according to claim 1, characterised in that the fully automatic storage of the returned articles (3a, 3b, 3c, 3d, 29) and the data collection are controlled by an electronic data collection and processing unit (8), in which the data detected are stored.

3. Method according to claim 2, characterised in that before storage the returned articles (3a, 3b, 3c, 3d, 29) are subjected to a quality check and are sealed in packaging material, preferably in foil (4), by means of a packaging device (2).

4. Method according to claim 3, characterised in that the specific return data of the sealed returned articles (3a) are detected by means of a detection device, in particular a scanner (5).

5. Method according to claim 4, characterised in that as specific return data, the order number (10) of the returned article and/or a serial number (36) are detected.

6. Method according to claim 5 or 6, characterised in that the specific return data are printed on the sealed returned article (3c) by means of a printer, in particular a foil printer (9), preferably on the edge, or a correspondingly printed label is stuck on.

7. Method according to claim 6, characterised in that the returned article (3d) is so introduced by means of an automatic tool, in particular a robot (11) into a storage container (14) having a front removal aperture (24), that the printed-on specific return data (10, 37) are perceivable in the region of the removal aperture (24).

8. Method according to claim 7, characterised in that a plurality of returned articles (28) are stacked in a storage container (14) until a predetermined level of filling is reached.

9. Method according to claim 7 or 8, characterised in that the storage container (14) is allocated to a specific storage position in the returned article store (21) provided with a code (31a) and is disposed in the corresponding storage position by means of a further tool, in particular a stacking robot (17).

10. Method according to claim 9, characterised in that the storage container (14) is introduced into a movable storage trolley (19) having the individual storage positions or being provided with a code (31b), the returned article store (21) being formed from one or more storage trolleys (19).

11. Method according to claim 10, characterised in that the storage containers (14) are stacked one on top of another and/or one next to another according to their code (31a) of the storage position on the storage trolley (19).

12. Method according to one of claims 9 to 11, characterised in that before the storage containers (14) are housed in the returned article store (21) and/or optionally the storage trolley (19), the code data (31a, 31b) of the specific storage position and optionally of the specific storage trolley (19) are applied to the storage container (14) by means of a printer, in particular a labelling machine (16), preferably on the front side (30).

13. Method according to claim 12, characterised in that in the electronic data collection and processing unit (8), the specific return data (10, 36) and the data (31a, 31b) of the storage position and/or of the storage trolley (19) are allocated to each individual returned article (28).

14. Method according to claim 13, characterised in that in order to carry out each order, first the inventory of the return store (21) is scanned about the order.

15. Method according to claim 14, characterised in that the electronic data collection and processing unit (8) communicates preferably via an interposed networking plane (33) with an electronic data processing unit (34) allocated to the ordering plane.

16. Method according to claim 14 or 15, characterised in that as a function of the scanning result, a goods ticket (35) associated with the relevant order and acting for the manual removal of the returned articles (29) associated with the relevant order from the returned article store (21) and having the specific return data (10, 36) and the code data (31a, 31b) of the storage position and optionally of the storage trolley (19) is created.

17. Method according to claim 16, characterised in that after the creation of the goods ticket (35), the stock data of the returned article store (21) are updated in the electronic data collection and processing unit (8) as a function of returned articles (29) to be removed.

18. Method according to claim 17, characterised in that after completion of removal of the returned articles (29), the storage container (14), upon reaching of a predetermined filling level of the storage container (14) and/or of the storage trolley (19) and/or of the returned article store (21), are guided back for compression or refilling.

19. Storage container in box form for a returned article store for use in the method according to one of claims 7 to 18, wherein the preferably rectangular storage container (14) is open at the top and on at least one of the end faces (30) is a removal aperture (24) for removal at the end face of the returned articles (29) stored therein, characterised in that the storage container (14) is divided into two substantially equal-volume shelves (27a, 27b) by a central partition wall (26) transverse to the longitudinal direction and in that one removal aperture (24) is disposed on each end face (30).

20. Storage container according to claim 19, characterised in that in the region of the removal aperture (24) a sealing device is disposed for sealing the removal aperture (24) after filling.

21. Storage container according to claim 20, characterised in that the sealing device is formed as a roll-type sliding seal (25).

22. Storage container according to claim 20 or 21, characterised by indicator elements (28) for indicating fullness disposed on the inside of the wall (25) opposite the removal aperture (24).

23. Storage container according to claim 22, characterised in that the indicator elements (28) are so formed that during filling they communicate with separately disposed sensor elements communicating with the electronic data collection and processing unit (8) in such a manner that the control of filling of the storage container (14) is effected dependently on the filling level.

24. Storage container according to claim 22, characterised in that the indicator elements (28) are formed as reflectors which with the sensor elements form a light barrier.

## Revendications

1. Procédé de répartition des objets retournés dans des magasins de vente par correspondance, en particulier des vêtements, caractérisé en ce que les objets retournés (3a, 3b, 3c, 3d, 29) sont répartis pêle-mêle par voie tout automatique dans un magasin pour objets retournés (21), les données relatives à la position de stockage et les données spécifiques - de préférence par la lecture du code barres apposé - à chaque objet retourné (3a, 3b, 3c, 3d, 29) étant enregistrées et seule la reprise au stock des objets retournés (3a, 3b, 3c, 3d, 29) dans le magasin pour objets retournés (21), dans un but d'approvisionnement, étant exécutée manuellement conformément aux données de la position de stockage et aux données spécifiques de l'objet retourné.

2. Procédé selon la revendication 1, caractérisé en ce que le stockage tout automatique des objets retournés (3a, 3b, 3c, 3d, 29) et l'enregistrement des données sont commandés par une unité électronique d'enregistrement et de traitement des données (8), dans laquelle sont stockées les données enregistrées.

3. Procédé selon la revendication 2, caractérisé en ce que les objets retournés (3a, 3b, 3c, 3d, 29) sont soumis à un contrôle de qualité avant d'être stockés et sont emballés par un dispositif d'emballage (2) dans un matériau d'emballage, en particulier dans une feuille (4), fermé par soudage.

4. Procédé selon la revendication 3, caractérisé en ce que les données spécifiques aux objets retournés (3a) et emballés dans un matériau fermé par soudage sont enregistrées par un dispositif d'enregistrement, en particulier un scanner (5).

5. Procédé selon la revendication 4, caractérisé en ce que les données spécifiques aux objets retournés enregistrées sont le numéro de commande (10) de l'objet retourné et/ou un numéro d'ordre (36).

6. Procédé selon la revendication 5 ou 6, caractérisé en ce que les données spécifiques aux objets retournés sont imprimées sur l'emballage de l'objet retourné fermé par soudage (3c), de préférence sur le bord, à l'aide d'un dispositif d'impression, en particulier une imprimante à feuilles (9), ou une étiquette imprimée de manière correspondante est collée sur l'emballage.

7. Procédé selon la revendication 6, caractérisé en ce que l'objet retourné (3d) est introduit à l'aide d'un outil automatique, en particulier un appareil de manipulation à distance (11) dans un casier de stockage (14) muni d'une ouverture de prélèvement (24) frontale, de telle sorte que les données spécifiques aux objets retournés imprimées (10, 37) peuvent être lues dans la zone de l'ouverture de prélèvement (24).

8. Procédé selon la revendication 7, caractérisé en ce que plusieurs objets retournés (28) sont empilés les uns au-dessus des autres dans un casier de stockage (14) jusqu'à ce qu'un niveau de remplissage prédéterminé est atteint.

9. Procédé selon la revendication 7 ou 8, caractérisé en ce qu'une position de stockage spécifique, présentée sous la forme d'un code (31a), dans le magasin pour objets retournés (21) est attribuée à chaque casier de stockage (14) et ledit casier de stockage est installé à l'aide d'un autre outil, en particulier un bras articulé de gerbage (17), dans la position de stockage correspondante.

10. Procédé selon la revendication 9, caractérisé en ce que le casier de stockage (14) est installé sur un chariot de stockage (19) mobile, qui comporte chaque position de stockage, qui est muni de préférence d'un code (31b), le magasin pour objets retournés (21) étant constitué par un ou plusieurs chariots de stockage (19).

11. Procédé selon la revendication 10, caractérisé en ce que les casiers (14) sont empilés et/ou posés les uns à côté des autres sur le chariot de stockage (19) en fonction de leur code (31a).

12. Procédé selon l'une quelconque des revendications 9 à 11, caractérisé en ce que, avant d'installer les casiers de stockage (14) dans le magasin pour objets retournés (21) et/ou, le cas échéant, dans les chariots de stockage (19), les données de stockage (31a, 31b) relatives à la position de stockage spécifique et, le cas échéant, au chariot de stockage (19) spécifique sont appliquées sur le casier de stockage (14), de préférence sur la partie frontale (30), à l'aide d'un dispositif d'impression, en particulier une imprimante pour étiquettes (16).

13. Procédé selon la revendication 12, caractérisé en ce que les données spécifiques aux objets retournés (10, 36) et les données relatives à la position de stockage et/ou au chariot de stockage (19) sont attribuées à chaque objet retourné (28) par l'unité électronique d'enregistrement et de traitement des données (8).

14. Procédé selon la revendication 13, caractérisé en ce que chaque ordre d'approvisionnement est exécuté seulement après une procédure d'interrogation relative à l'état du magasin pour objets retournés (21) en fonction de l'ordre d'approvisionnement.

15. Procédé selon la revendication 14, caractérisé en ce que l'unité électronique d'enregistrement et de traitement des données (8) communique, de préférence par l'intermédiaire d'un niveau de gestion du réseau (33), avec une unité électronique de traitement des données (34) affectée au niveau des approvisionnements.

16. Procédé selon la revendication 14 ou 15, caractérisé en ce que, en fonction du résultat de la procédure d'interrogation, le système établit un bon de marchandise (35) qui correspond à chaque ordre d'approvisionnement, qui est utilisé pour la reprise manuelle, dans le magasin pour objets retournés (21), des objets retournés (29) concernés par chaque ordre d'approvisionnement, et qui contient les données spécifiques aux objets retournés (10, 36) et les données du codage (31a, 31b) de la position de stockage et, le cas échéant, du chariot de stockage (19).

17. Procédé selon la revendication 16, caractérisé en ce que, après l'établissement du bon de marchandise (35), les données relatives à l'état du magasin pour objets retournés (21) sont actualisées dans l'unité électronique d'enregistrement et de traitement des données (8), en fonction des objets retournés à reprendre au stock (29).

18. Procédé selon la revendication 17, caractérisé en ce que, lorsqu'un le niveau de remplissage prédéterminé des casiers de stockage (14) et/ou du chariot de stockage (19) et/ou du magasin pour objets retournés (21) est atteint après que les objets retournés (29) aient été correctement repris au stock, les casiers de stockage (14) sont acheminés en retour pour compacter les marchandises ou ajouter de nouvelles marchandises.

19. Casier de stockage en forme de caisson destiné à un magasin pour objets retournés et destiné à être utilisé dans le procédé selon l'une quelconque des revendications 7 à 18, le casier de stockage (14), de préférence rectangulaire, étant ouvert sur le dessus et étant muni sur au moins une des faces frontales (30) d'une ouverture de prélèvement (24) par laquelle les objets retournés (29) sont repris au stock, caractérisé en ce que le casier de stockage (14) est partagé par une paroi de séparation (26), disposée au milieu en position verticale transversalement à l'axe longitudinal, en deux compartiments (27a, 27b) sensiblement de volume identique, et en ce qu'une ouverture de prélèvement (24) est disposée sur les deux faces frontales (30).

20. Casier de stockage selon la revendication 19, caractérisé en ce qu'un dispositif de fermeture, destiné à fermer l'ouverture de prélèvement (24) après le remplissage dudit casier de stockage, est disposé dans la zone de l'ouverture de prélèvement (24).

21. Casier de stockage selon la revendication 20, caractérisé en ce que le dispositif de fermeture est conçu comme un dispositif de fermeture coulissant (25) en forme de volet roulant.

22. Casier de stockage selon la revendication 20 ou 21, caractérisé par des éléments de repérage (28), destinés à repérer le niveau de remplissage et disposés à l'intérieur sur la paroi (25) opposée à l'ouverture de prélèvement (24).

23. Casier de stockage selon la revendication 22, caractérisé en ce que les éléments de repérage (28) sont conçus de telle sorte que pendant le remplissage ils communiquent avec des capteurs disposés séparément et reliés à l'unité électronique d'enregistrement et de traitement des données (8), de telle sorte que la commande de remplissage du casier de stockage (14) est exécutée en fonction du niveau de remplissage.

24. Casier de stockage selon la revendication 22, caractérisé en ce que les éléments de repérage (28) sont conçus comme des réflecteurs, qui forment avec les capteurs une barrière photoélectrique.
